# EUROPÄISCHE PATENTSCHRIFT

(11) **EP 0 941 152 B1**
(45) Veröffentlichungstag und Bekanntmachung des Hinweises auf die Patenterteilung: **30.07.2003**
(21) Anmeldenummer: 98954250.1
(22) Anmeldetag: 03.09.1998
(51) Int. Cl.: B23K 10/02

(54) **VORRICHTUNG ZUM VERSCHWEISSEN VON FOLIEN**
DEVICE FOR WELDING FOILS
DISPOSITIF DE SOUDAGE DE FEUILLES

(30) Priorität: 26.09.1997 DE 19742442
(43) Veröffentlichungstag der Anmeldung: 15.09.1999
(73) Patentinhaber: RAantec GmbH & Co.KG, 33803 Steinhagen (DE)
(72) Erfinder: HOLSTE, Ralf, D-33790 Halle (DE); JAHN, Ansgar, D-49186 Bad Iburg (DE); FÖRNSEL, Peter, D-32139 Spenge (DE); BUSKE, Christian, D-33803 Steinhagen (DE)
(74) Vertreter: Rapp, Bertram
(86) Internationale Anmeldenummer: EP9805591
(87) Internationale Veröffentlichungsnummer: WO99016572

(56) Entgegenhaltungen:
- EP-A- 0 691 173
- DE-A- 3 621 030
- DE-C- 4 219 619
- US-A- 2 975 263
- US-A- 5 298 713

## Beschreibung

Die Erfindung betrifft ein Verfahren zum Verschweißen von Kunststoffolien längs einer Schweißnaht nach dem Oberbegriff des Anspruchs 1. DE-A-3621030 zeigt ein derartiges Verfahren.

Aus US-A-5 298 713 ist es bekannt, Kunststoffteile mit Hilfe eines Strahls eines heißen Inertgases zu verschweißen, der beispielsweise von einem Plasmaofen erzeugt wird und an der Berührungsstelle der beiden Kunststoffteile auf deren einander zugewandte Oberflächen gerichtet wird.

Aus EP-A-0 691 173 ist es bekannt, flach aufeinander liegende Metallbleche mit Hilfe eines Plasmabrenners zu verschweißen. Dabei wird mit einem sehr heißen übertragenen Lichtbogen gearbeitet, der von einer Elektrode des Plasmabrenners auf die zu verschweißenden Bleche überspringt und diese lokal zum Schmelzen bringt. Um die Elektrode herum wird eine drallförmige Strömung eines Arbeitsgases erzeugt.

Aufgabe der Erfindung ist es, ein Verfahren zum Verschweißen von Kunststoffolien zu schaffen, das sich durch eine geringe Störanfälligkeit auszeichnet und eine hohe Produktivität ermöglicht.

Diese Aufgabe wird bei einem Verfahren der eingangs genannten Art dadurch gelöst, daß die Folien mit Hilfe eines Plasmastrahls verschweißt werden, der auf die Oberfläche einer der aufeinander liegenden Folienlagen gerichtet ist. Eine hierzu geeignete Vorrichtung weist eine Plasmadüse und eine Transporteinrichtung auf, die eine Relativbewegung zwischen der Plasmadüse und den Folienlagen längs der Schweißnaht erzeugt.

Da der Schweißvorgang berührungslos erfolgt, das heißt, ohne direkte Berührung zwischen den Folienbahnen und der Plasmadüse, ist die Vorrichtung störungsunanfällig, und der Schweißvorgang ist relativ unempfindlich gegenüber geringen Abstandsänderungen zwischen den Folienlagen und der Plasmadüse. So kann auch bei längeren Schweißnähten eine hohe Qualität der Schweißnaht erreicht werden.

Da der Plasmastrahl eine sehr hohe Temperatur aufweisen kann und folglich nur sehr kurzzeitig auf das Folienmaterial einzuwirken braucht, kann die Plasmadüse mit hoher Geschwindigkeit an der Schweißnaht entlangbewegt werden, so daß eine hohe Produktivität erreichbar ist. Die Plasmadüse selbst hat einen sehr kompakten und sehr einfachen Aufbau und ein geringes Gewicht, so daß sie problemlos längs der Schweißnaht bewegt werden kann.

Wenn eine geradlinige Schweißnaht zu erzeugen ist, so wird bevorzugt die Plasmadüse stationär gehalten, und die zu verschweißenden Folien werden mit Hilfe der Transporteinrichtung an der Plasmadüse vorbeibewegt, so daß eine parallel zur Transportrichtung verlaufende Schweißnaht erzeugt wird. Die Transporteinrichtung kann folglich kontinuierlich mit konstanter Geschwindigkeit angetrieben werden, so daß praktisch keine beweglichen Teile hin und her bewegt werden müssen und keine aufwendige Taktsteuerung erforderlich ist. Die zu verschweißenden Folienlagen können beispielsweise mit Hilfe von Andruckrollen gegeneinander gedrückt werden, die beiderseits der stationären Plasmadüse an der Transportbahn angeordnet sind.

Wenn die Schweißnaht wie bei herkömmlichen Vorrichtungen quer zur Transportrichtung verläuft, so kann die Plasmadüse beispielsweise mit einer Kette hin und her bewegt werden. Die Plasmadüse bewegt sich dann bei den aufeinanderfolgenden Arbeitstakten abwechselnd von rechts nach links und von links nach rechts. Mit Hilfe der Kette ist es auch möglich, die Plasmadüse so umzulenken, daß sie eine U-förmige Bahn beschreibt und eine an einer Seite umgefaltete Folienbahn auf den drei übrigen Seiten verschweißt. Mit einer so gestalteten Vorrichtung lassen sich auch Großgebinde wie beispielsweise Stoffballen oder Teppiche zuverlässig und effizient in Folie einschweißen.

Im folgenden wird die Erfindung anhand der Zeichnungen näher erläutert.

Es zeigt:
- Figur 1: einen schematischen Schnitt durch eine Folienschweißvorrichtung zur Durchführung des erfindungs gemäßen Verfahrens,
- Figur 2: einen schematischen Schnitt durch eine zweite Vorrichtung zur Durchführung das erfindungsgemäßen Verfahrens; und
- Figur 3: die Vorrichtung nach Figur 2 in einem anderen Betriebszustand.

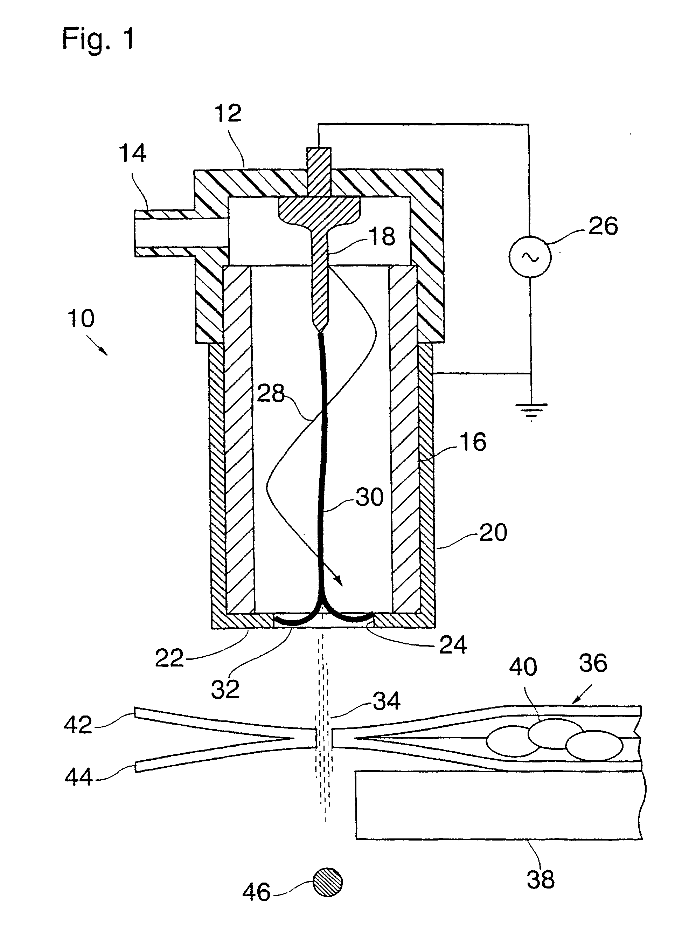

Wesentlicher Bestandteil der Vorrichtung ist eine Plasmadüse 10, deren Aufbau und Wirkungsweise zunächst anhand der Figur 1 näher erläutert werden soll.

Im gezeigten Beispiel weist die Plasmadüse 10 eine Konstruktion auf, die als solche aus DE 195 32 412 A1 bekannt ist.

Die Plasmadüse 10 besitzt ein topfförmiges Gehäuse 12 aus Kunststoff, das seitlich mit einem Anschluß 14 zur Zufuhr eines Arbeitsgases versehen ist. In der Öffnung des Gehäuses 12 ist koaxial ein Düsenrohr 14 aus Keramik gehalten. Im Inneren des Gehäuses 12 ist mittig eine Stiftelektrode 18 aus Kupfer angeordnet, deren Spitze in das Düsenrohr 16 hineinragt. Der äußere Umfang des Düsenrohres ist außerhalb des Gehäuses 12 von einem Mantel 20 aus elektrisch leitendem Material umgeben, der am freien Ende des Düsenrohres 16 eine Ringelektrode 22 bildet. Die Ringelektrode 22 begrenzt eine Düsenöffnung 24, deren Durchmesser etwas kleiner ist als der Innendurchmesser des Düsenrohres 16, so am Auslaß des Düsenrohres eine gewisse Einschnürung erreicht wird.

Der Mantel 20 und damit die Ringelektrode 22 sind geerdet, und zwischen dieser Ringelektrode und der Stiftelektrode 18 wird mit Hilfe eines Hochfrequenzgenerators 26 eine Wechselspannung mit einer Frequenz in der Größenordnung von 20 kHz angelegt, deren Spannung regelbar ist und während des Betriebs der Plasmadüses etwa in der Größenordnung von 5 bis 30 kV liegt.

Der Anschluß 14 für das Arbeitsgas ist exzentrisch in bezug auf das Gehäuse 12 angeordnet, so daß das zugeführte Arbeitsgas drallförmig durch das Düsenrohr 16 strömt, wie durch den Pfeil 28 in Figur 1 angedeutet wird. Unterstützt durch die Einschnürung am Auslaß des Düsenrohres bildet sich ein stabiler Gaswirbel, dessen Wirbelkern sich längs der Achse des Düsenrohres erstreckt.

Der elektrisch leitende Mantel 20 erstreckt sich am gehäuseseitigen Ende etwa bis in Höhe der Spitze der Stiftelektrode 18. Beim Hochregeln der Spannung kommt es an der Spitze der Stiftelektrode 18 zunächst zu einer Korona-Entladung. Die bläulich leuchtenden Entladungsbüschel erstrecken sich radial auf die Wand des Düsenrohres 16, und der Transport der Ladungsträger zum Mantel 20 erfolgt durch das Keramikmaterial des Düsenrohres 16 hindurch. Diese Korona-Entladung liefert die notwendigen lonen, durch die bei steigender Spannung eine Bogenentladung von der Stiftelektrode 18 zur Ringelektrode 22 gezündet wird. Bei Verwendung von Luft als Arbeitsgas entsteht ein weiß-blau leuchtender Lichtbogen 30, der sich von der Spitze der Stiftelektrode 18 aus in einen scharf begrenzten dünnen Kanal längs der Achse des Düsenrohres 16 bis etwa in die Mitte der Austrittsöffnung 24 erstreckt. Erst dort teilt sich der Lichtbogen in mehrere Teiläste 32 auf, die radial zur Ringelektrode 22 führen. Der Punkt, an dem sich der axiale Lichtbogen 30 in die einzelnen Teiläste 32 verzweigt, bildet zugleich den Ursprung eines bei Verwendung von Luft als Arbeitsgas schwach goldfarben leuchtenden Plasmastrahls 34.

Das Düsenrohr 16 hat im gezeigten Beispiel einen Innendurchmesser von etwa 8 mm, und der axiale Abstand zwischen der Spitze der Stiftelektrode 18 und der Düsenöffnung 24 beträgt etwa 55 mm. Der Innendurchmesser der Düsenöffnung 24 beträgt etwa 5 mm. Durch Vergrößern des Abstands zwischen der Stiftelektrode und der Düsenöffnung 24 kann die Bündelung des Plasmastrahls verbessert und damit die Temperatur erhöht werden. Auch die Einschnürung an der Düsenöffnung 24 scheint die Bündelung des Plasmastrahls zu begünstigen.

Wenn der Durchsatz des Arbeitsgases durch das Düsenrohr 16 vergrößert wird, verlagert sich der Ursprung des Plasmastrahls weiter nach außen, d.h., in Richtung auf das Werkstück, und die Flamme wird länger und schlanker. Gleichzeitig nimmt die in Figur 1 erkennbare Auswärts-Krümmung der radialen Äste 32 des Lichtbogens zu. Wenn man andererseits die Strömung des Arbeitsgases drosselt oder ganz abschaltet, weitet sich der axiale Lichtbogen 30 auf, bis er schließlich nahezu das gesamte Innere des Düsenrohres ausfüllt. Der Plasmastrahl 34 wird dabei kürzer, und sein Ursprung ist nicht mehr punktförmig, sondern flächig über den Querschnitt der Düsenöffnung 24 verteilt. Bei mäßigem Gasdurchsatz erkennt man, daß der Lichtbogen 30 innerhalb des Düsenrohres der drallförmigen Gasströmung folgt. Bei allmählicher Steigerung des Gasdurchsatzes wird der Lichtbogen 30 in Radialrichtung zunehmend komprimiert und auf der Achse des Düsenrohres fixiert. Der Lichtbogen 30 scheint demnach durch den Kern des Gaswirbels kanalisiert zu werden. Aufgrund dieses Effektes erhält man bei hinreichend hohem Gasdurchsatz einen sehr stabilen und heißen Plasmastrahl 34, der von einem punktförmigen Ursprung dicht vor der Mitte der Austrittsöffnung 24 ausgeht.

Bei dem in Figur 1 gezeigten Beispiel dient die Vorrichtung zum Zuschweißen von Folienbeuteln 36, die mit Hilfe einer Transporteinrichtung 38 an der Plasmadüse 10 vorbeigeführt werden. Die Transporteinrichtung 38 ist hier als Förderband ausgebildet, das kontinuierlich in der zur Zeichenebene in Figur 1 senkrechten Richtung läuft. Die Folienbeutel 36, die schon mit einem Inhalt 40 gefüllt sind, liegen so auf dem Förderband, daß ihre offenen Seiten nach links in Figur 1 über den Rand des Förderbandes überstehen. Die Plasmadüse 10 ist stationär über der Transporteinrichtung 38 angeordnet und so positioniert, daß der Plasmastrahl 34 unmittelbar neben dem Rand des Förderbandes senkrecht nach unten abgegeben wird und auf die flach aufeinanderliegenden oberen und unteren Folienlagen 42, 44 des Folienbeutels auftrifft. Unterhalb der Folienbeutel 36 ist gegenüberliegend zu der Plasmadüse 10 eine geerdete Sammelelektrode 46 angeordnet.

Der von der Plasmadüse 10 erzeugte scharf gebündelte Plasmastrahl 34 hat eine so hohe Temperatur, daß er die aufeinanderliegenden Folienlagen 42, 44 durchschneidet und dabei deren Ränder miteinander verschweißt. Die Fördergeschwindigkeit der Transporteinrichtung 38 wird so eingestellt, daß der Plasmastrahl 34 die Folienlagen 42, 44 gerade noch durchtrennt. Wenn die Folienbeutel 36 kontinuierlich unter der Plasmadüse 10 hindurchlaufen, werden somit deren Öffnungen zugeschweißt, und die in Figur 1 nach links überstehenden Enden der Folienlagen 42, 44 werden durch den Plasmastrahl 34 abgetrennt. Die in dem Plasmastrahl 34 enthaltenen elektrischen Ladungen werden von der Sammelelektrode 46 aufgefangen und abgeleitet. Die Sammelelektrode 46, die beispielsweise als dünner Draht ausgebildet ist. trägt dazu bei, den scharf gebündelten Plasmastrahl 34 zu stabilisieren.

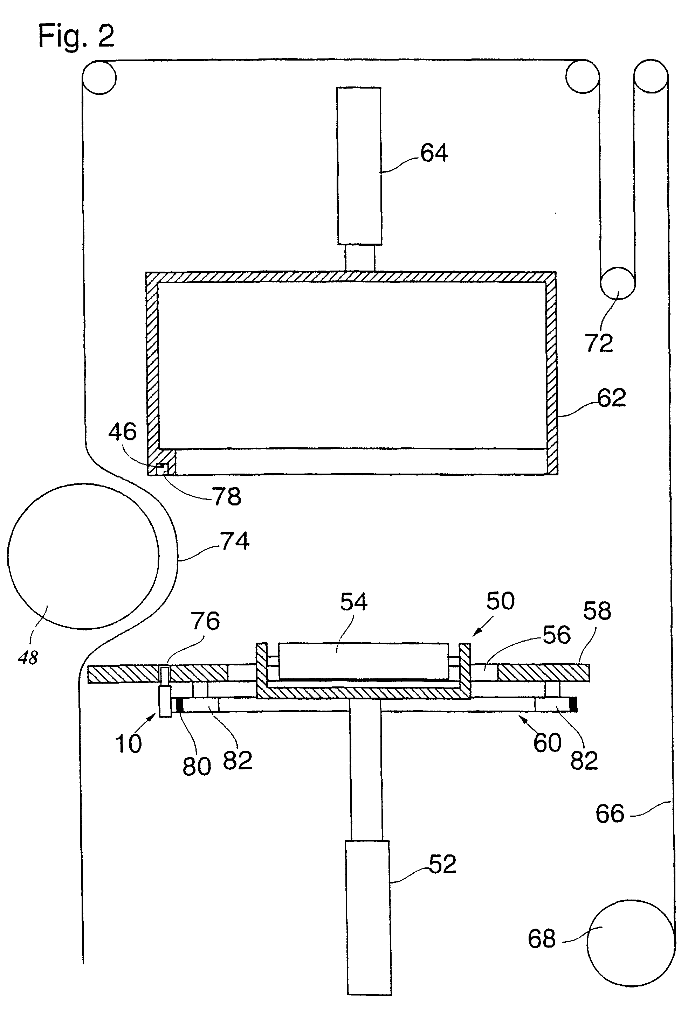

Figur 2 zeigt eine weitere Vorrichtung zur Durchführung des erfindungsgemäßen Verfahrens, mit der Großgebinde wie beispielsweise Stoffballen 48 in Folie eingeschweißt werden können.

Ein Rollentisch 50, der zur Aufnahme des Stoffballens 48 während des Schweißvorgangs dient, ist höhenverstellbar am oberen Ende eines Hubgestells 52 angeordnet und weist Transportrollen 54 auf, mit denen der fertig eingeschweißte Stoffballen 48 in der Richtung senkrecht zur Zeichenebene in Figur 2 abtransportiert werden kann. In dem in Figur 2 gezeigten Zustand liegt der Rollentisch 50 in einem Fenster 56 eines stationären Rahmens 58, unter dem eine Transporteinrichtung 60 für die Plasmadüse 10 befestigt ist.

Oberhalb des Rahmens 58 ist ein haubenförmiger Niederhalter 62 angeordnet, der höhenverstellbar an einem weiteren Hubgestell 64 aufgehängt ist.

Eine Folienbahn 66 wird von einem Folienwickel 68 abgezogen und über ein Tänzersystem 70 zur Zugspannungsregulierung über den Niederhalter 62 und das Hubgestell 64 hinweg zur Beschickungsseite der Vorrichtung (links in Figur 2) geführt. Vor der Zufuhr des Stoffballens 48 bildet die Folienbahn 66 auf der Beschickungsseite einen frei herabhängenden Vorhang, dessen unteres Ende im Bedarfsfall mit Hilfe einer nicht gezeigten Saugeinrichtung gehalten werden kann. Beim Einführen des Stoffballens 48 in den Zwischenraum zwischen dem Rahmen 58 und dem Niederhalter 62, wird die herabhängende Folienbahn 66 eingestülpt, so daß sie eine Tasche 74 bildet.

In dem Rahmen 58 ist ein Schlitz 76 ausgebildet, in den die Plasmadüse 10 von unten hineinragt. Dieser Schlitz umgibt das Fenster 56 auf drei Seiten, nämlich links, vorn und hinten in Figur 2. Im unteren Rand des Niederhalters 62 ist an diesen drei Seiten eine Nut 78 ausgebildet, die dem Schlitz 76 auf ganzer Länge gegenüberliegt und an deren Grund die Sammelelektrode 46 verläuft.

Die Transporteinrichtung 60 wird durch eine umlaufende Kette 80 gebildet. an der die Plasmadüse 10 befestigt ist und die derart über Umlenkrollen 82 geführt ist, daß mit ihrer Hilfe die Plasmadüse 10 in dem Schlitz 76 entlang bewegt werden kann.

Ausgehend von dem in Figur 2 gezeigten Zustand wird der Stoffballen 48 tiefer in die Vorrichtung eingeführt und auf dem Rollentisch 50 abgelegt. Die Tasche 74 schließt sich dabei vollständig um den Stoffballen 48, so daß im Bereich des Schlitzes 76 zwei Folienlagen unmittelbar übereinander liegen.

Der Rollentisch 50 wird dann mit Hilfe des Hubgestells 52 so weit abgesenkt, daß sich die Mitte des Stoffballens 48 etwa in Höhe der oberen Oberfläche des Rahmens 58 befindet. Hierdurch wird der Verzug der Folienlagen minimiert.

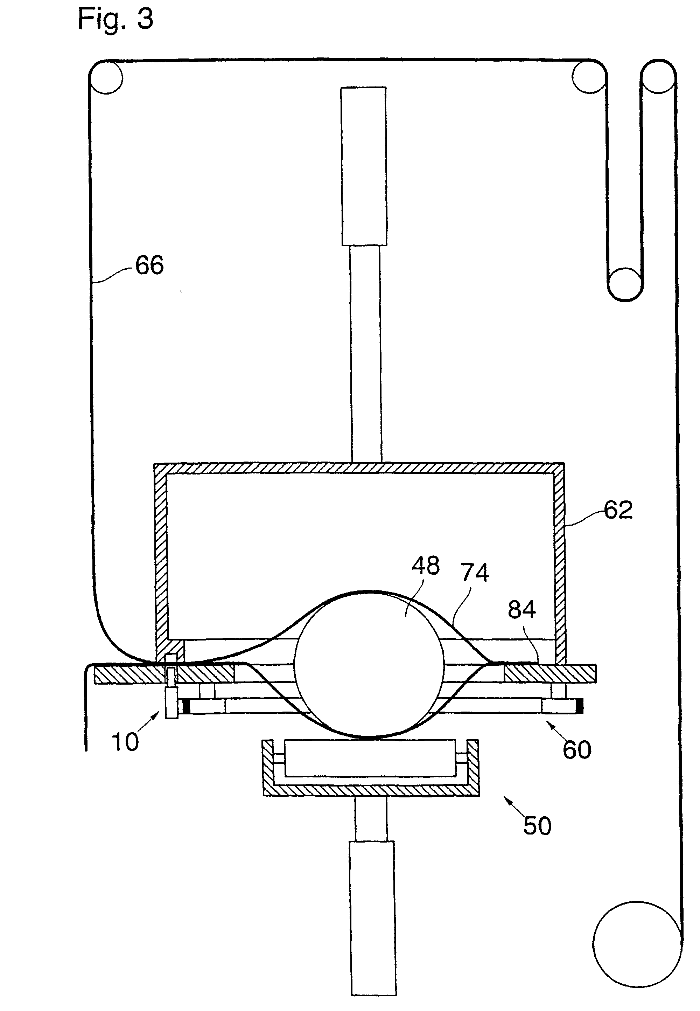

Wie in Figur 3 gezeigt ist, wird dann der Niederhalter 62 auf den Rahmen 58 abgesenkt. Auf diese Weise werden die beiden Folienlagen der Tasche 74 auf den drei Seiten, an denen sich der Schlitz 76 und die Nut 78 befinden, zwischen dem Rahmen 58 und dem Niederhalter 62 eingespannt und leicht gegeneinander gedrückt. Auf der vierten Seite bilden die beiden Folienlagen der Tasche 74 dann eine Falte 84, die innerhalb des Niederhalters 62 liegt.

Die Plasmadüse 10 befindet sich zunächst an einem Ende des Schlitzes 76 in einer Position zwischen der Falte 84 und der Innenwand des Niederhalters 62. Die Plasmadüse wird dann mit Hilfe der Transporteinrichtung 60 zum entgegengesetzten Ende des Schlitzes 76 bewegt, so daß die beiden Folienlagen der Tasche 74 mit Hilfe des Plasmastrahls verschweißt werden. Der Stoffballen 48 ist dann an drei Seiten von der Schweißnaht und an der vierten Seite von der Falte 84 umgeben und ist somit vollständig in die Folie eingeschweißt.

Schließlich wird der Niederhalter 62 wieder angehoben, der Rollentisch 50 wird wieder in die in Figur 2 gezeigte Position gebracht, und der eingeschweißte Stoffballen 48 wird mit Hilfe der Transportrollen 54 aus der Vorrichtung herausgefahren.

Im nächsten Arbeitstakt, beim Verschweißen des nächsten Stoffballens 48, wird die Plasmadüse 10 wieder durch den Schlitz 76 in die ursprüngliche Position zurückgefahren.

## Patentansprüche

1. Verfahren zum Verschweißen von Kunststoffolien, bei dem die Folienlagen (42, 44) flach aufeinander gelegt und durch Wärmeeinwirkung längs einer Schweißnaht verschweißt werden, **dadurch gekennzeichnet daß** die Kunststoffolien mit Hilfe eines Plasmastrahls (34) verschweißt werden, der auf die Oberfläche einer (42) der aufeinander liegenden Folienlagen gerichtet ist.

## Claims

1. Method for welding plastic foils in which the foil layers (42, 44) are placed flat on one another and welded through the action of heat along a weld seam, **characterised in that** the plastic foils are welded with the aid of a plasma beam (34) which is directed on to the surface of one (42) of the foil layers lying on one another.

## Revendications

1. Procédé de soudage de feuilles de matière plastique, selon lequel on pose les couches de feuille (42, 44) à plat l'une au-dessus de l'autre et on les soude sous l'action de la chaleur le long d'un cordon de soudure, **caractérisé en ce qu'**on soude les feuilles de matière plastique au moyen d'un jet plasma (34) qui est dirigé sur la surface de l'une (42) des couches de feuille situées l'une au-dessus de l'autre.
